# EUROPÄISCHE PATENTSCHRIFT

(11) **EP 0 753 423 B1**
(45) Veröffentlichungstag und Bekanntmachung des Hinweises auf die Patenterteilung: **03.11.1999**
(21) Anmeldenummer: 96110955.0
(22) Anmeldetag: 06.07.1996
(51) Int. Cl.: B60K 5/08

(54) **Feuerwehrfahrzeug, insbesondere Flughafenlöschfahrzeug, mit mindenstens zwei beidseits einer Längsachse angeordneten Antriebsmotoren**
Fire-fighting vehicle, especially for airports, with at least two drive motors arranged on either side of a longitudinal axis
Véhicule de lutte contre l'incendie notamment pour aéroport, avec au moins deux moteurs d'entraînement disposés d'une part et d'autre d'un axe longitudinal

(30) Priorität: 11.07.1995 AT 116895
(43) Veröffentlichungstag der Anmeldung: 15.01.1997
(73) Patentinhaber: Rosenbauer International Aktiengesellschaft, 4060 Leonding (AT)
(72) Erfinder: Wieser, Johann, Ing., 3354 Wolfsbach (AT); Laubichler, Wolfgang, Ing., 4050 Traun (AT)
(74) Vertreter: Secklehner, Günter, Dr.

(56) Entgegenhaltungen:
- DE-A- 2 620 661
- DE-A- 4 002 890
- DE-A- 4 217 260
- GB-A- 316 893
- GB-A- 667 949
- GB-A- 750 039
- GB-A- 1 425 623
- US-A- 2 384 471

## Beschreibung

Die Erfindung betrifft ein Feuerwehrfahrzeug, insbesondere ein Flughafenlöschfahrzeug, wie dieses im Oberbegriff des Patentanspruches 1 beschrieben ist.

Aus der gattungsbildenden GB-A-750 039 ist ein Feuerwehrfahrzeug, insbesondere eine Flughafenlöschfahrzeug, mit mindestens zwei beidseits einer Längsachse angeordneten Antriebsmotoren, die jeweils über ein Getriebe mit zumindest einer Fahrachse und/oder einem Nebenantrieb kuppelbar sind, bekannt. Nachteilig ist hierbei, daß die Antriebsmotoren in den Fahrzeugaufbau integriert sind und somit ein erheblicher Platzbedarf im Fahrzeugaufbau benötigt wird.

Weiters ist aus GB-A1 1 425 623 ein Nutzfahrzeug bekannt, bei dem zwei Antriebsmotoren unterhalb des Fahrzeugrahmens angeordnet sind. Die beiden Antriebsmotoren sind dabei parallel zueinander angeordnet und treiben jeweils ein hinteres Einzelrad an. Dazu sind die beiden parallel angeordneten Antriebsmotoren derartig ausgerichtet, daß sich deren Antriebswelle in Richtung der beiden hinteren Einzelrädern erstreckt. Nachteilig ist hierbei, daß durch den Antrieb der einzelnen Räder, welche grundsätzlich in einer Achse angeordnet sind, eine exakte Synchronisierung der beiden Antriebsmotoren notwendig ist.

Aus der GB-A1 316 893 ist ein Nutzfahrzeug, insbesondere ein Personenbus, bekannt, bei dem zwei Antriebsmotoren wiederum parallel zueinander angeordnet sind, die jedoch wiederum in der gleichen Lage ausgerichtet sind, wodurch nur die hinteren Einzelräder über die beiden Antriebsmotoren angetrieben werden können. Nachteilig ist hierbei wiederum, daß durch den Antrieb der einzelnen Räder eine exakte Synchronisierung der beiden Antriebsmotoren notwendig ist.

Es ist aus der DE-A1-26 20 621 bereits ein Nutzfahrzeug, insbesondere ein landwirtschaftlicher Schlepper, bekannt, der mindestens eine Hebevorrichtung für anzuschließende Arbeitsgeräte aufweist. Zum Antrieb des Schleppers und dessen Arbeitsgeräte sind mindestens zwei Antriebsmotoren vorgesehen, die unabhängig voneinander abschaltbar und beidseits der Fahrzeuglängsachse mit Abstand nebeneinander angeordnet sind. Die Kurbelwelle mindestens eines der beiden Antriebsmotoren liegt parallel zur Fahrzeuglängsachse und es ist jeder der beiden Antriebsmotoren über eine gesonderte Kupplung mit den nachfolgenden Antriebssträngen verbunden und können mit einer, allen Antriebsrädern des Fahrzeuges gemeinsamen Antriebswelle gekuppelt werden. Die Antriebsmotoren sind im wesentlichen oberhalb eines Fahrzeugrahmens und einer Motorhaube zwischen einer Vorder- und einer Hinterachse angeordnet. Nachteilig ist hierbei, daß es sich lediglich um ein Zugfahrzeug handelt und das Mitführen von Lasten, insbesondere im Bereich der Antriebsmotoren, nicht möglich ist.

Weiters ist es aus der DE-A1-40 02 890 bekannt, einen dreigliedrigen Gelenkomnibus mit mehreren über die Länge des Gelenkomnibusses verteilt angeordneten Antriebsmotoren anzutreiben, wobei in jeder der einachsigen Zellen der gegenüber dem Frontteil verschwenkbaren Fahrgastzellen ein Antriebsmotor für die in dieser Fahrgastzelle angeordnete Fahrachse angeordnet ist. Die Antriebsmotoren sind, bezogen auf die Längsachse des Fahrzeuges, im Bereich der gleichen Längsseitenwand des Fahrzeuges angeordnet. Damit ist es zwar möglich, die einzelnen Achsen ohne aufwendige hydraulische Fahrantriebe mit mechanischen Fahrantrieben anzutreiben, es wird jedoch eine ungleichmäßige Belastung des Fahrzeuges bzw. der einzelnen Fahrgastzellen erreicht und ragen überdies die Antriebsmotoren in den Innenraum des Gelenkomnibusses vor. Bedingt durch die Niederflurbauweise derartiger Gelenkomnibusse, die einen einfachen Fahrgastwechsel erlauben soll, spielt hierbei die Bodenfreiheit des Gelenkomnibusses weniger Rolle. Eine Ausbildung eines derartigen Fahrzeuges als Feuerwehrfahrzeug ist jedoch nicht möglich.

Schließlich ist es auch bereits bekannt - gemäß DE-A1-42 17 260-, jedem anzutreibenden Fahrzeugrad eines Omnibusses einen eigenen Antriebsmotor zuzuordnen. Diese Ausbildung ist von der Anzahl der benötigten Antriebsmotoren sehr aufwendig und bewirkt ein hohes Leergewicht.

Der vorliegenden Erfindung liegt die Aufgabe zugrunde, für ein Feuerwehrfahrzeug eine Motorenanordnung zu finden, die es neben einer günstigen Gewichtsverteilung und einer tiefen Schwerpunktlage ermöglicht, möglichst serienmäßige Antriebsmotoren in Kompaktbauweise für den Fahrantrieb und den Antrieb der Nebenaggregate einzusetzen.

Diese Aufgabe der Erfindung wird durch die Merkmale im Patentanspruch 1 gelöst. Vorteilhaft ist bei dieser Lösung, daß durch die Aufteilung der benötigten Antriebsenergie auf mehrere Antriebsmotoren, Antriebsmotoren mit kleinerer Leistung verwendet werden können und es damit möglich ist, Seriendieselmotoren für den Antrieb von Sonderfahrzeugen einzusetzen.

Gleichzeitig wird ein Gewichtsvorteil erreicht, da das Verhältnis zwischen dem Eigengewicht des Antriebsmotors und dessen Antriebsleistung bei kleineren Motoren günstiger ist, als bei extrem großen Motoren. Dazu kommt, daß auch der Platzbedarf zum Einbau kleinerer Antriebsmotoren geringer ist und damit eine freizügigere Anordnung der Antriebsmotoren zwischen den Fahrachsen und unterhalb der Ladefläche erzielt werden kann. Ein überraschender Vorteil der Lösung liegt darin, daß damit auch eine Anordnung der Antriebsmotoren in um 180° versetzter Lage möglich wird und dies zu einer Verringerung oder einer Neutralisierung der durch den Motor auf das Fahrzeug einwirkenden Schwingungen führt. Außerdem können die Antriebsmotore nunmehr im Bereich der Längsseitenwände des Fahrzeuges angeordnet werden, wodurch die Zugänglichkeit und die Wartung der Antriebsmotoren verbessert wird.

Weitere vorteilhafte Ausgestaltungen beschreiben die Patentansprüche 2 bis 10, wodurch eine für das Handling des Fahrzeuges günstige Schwerpunktlage und kurze Antriebsstränge von den Antriebsmotoren zu den Achsaggregaten bei einer guten Zugänglichkeit für vorzunehmende Reparatur- und Wartungsarbeiten erreicht wird. Des weiteren wird ein störungsfreier Verlauf der Ladefläche erzielt und durch die Anordnung der Antriebsmotoren mit Kupplung, Getriebe und gegebenenfalls Nebenabtrieb zwischen den Achsaggregaten und den Bereichen zwischen den Längsträgern des Fahrzeughauptrahmens und den Längsseitenwänden des Fahrzeuges die Außenabmessungen des Feuerwehrfahrzeuges bei hoher Volumskapazität für die Zuladung gering gehalten und damit die Manövrierbarkeit für schwierige Einsatzbedingungen vorteilhaft verbessert.

Möglich ist aber auch eine Ausbildung nach Patentanspruch 11, weil dadurch zusätzliche Varianten für Aufbaumöglichkeiten, insbesondere bei großvolumigen Zulademöglichkeiten, z.B. bei Tankaufbauten von Flughafen-Löschfahrzeugen, erreicht werden.

Gemäß einer vorteilhaften Weiterbildung, wie in Patentanspruch 12 beschrieben, wird die Baulänge der antriebsverbundenen Kombination von Antriebsmotor und Pumpeinrichtung reduziert.

Gemäß einer vorteilhaften Weiterbildung, wie in Patentanspruch 13 beschrieben, wird ein entsprechender Freiraum zwischen den Längsträgern und den Längsseitenwänden für die Antriebsaggregate geschaffen und Verkleidungs- bzw. Abdeckelemente oder Klappen etc. in vereinfachter Bauart ermöglicht.

Vorteilhaft ist aber auch eine Ausbildung nach Patentanspruch 14, wodurch eine stabile Auflagerung der Antriebsaggregate auf den Längsträgern erreicht wird, ohne daß zusätzliche Hilfsrahmen erforderlich sind.

Durch eine weitere vorteilhafte Ausgestaltung, wie in Patentanspruch 15 beschrieben, wird eine Reduzierung des Eigengewichtes und damit beim Betrieb eine Energieeinsparung erreicht und die Reduzierung in der Anzahl der erforderlichen Bauteile führt zu einer wirtschaftlichen Fertigung.

Möglich ist auch eine Ausbildung nach Patentanspruch 16, weil dadurch eine gekapselte Anordnung durch die Emissionen, insbesondere Lärmemissionen, weitestgehend vermieden werden.

Vorteilhafte Weiterbildungen werden auch in den Patentansprüchen 17 bis 20 beschrieben, wodurch die Zugänglichkeit zu den Antriebsmotoren durch die Höhen- und/oder Seiten- und/oder Schwenkverstellbarkeit der die Antriebsmotoren aufnehmenden Tragrahmen bei Wartungs- und/oder Reparaturarbeiten erreicht wird.

Vorteilhaft ist aber auch eine Ausbildung nach Patentanspruch 21, wodurch geringe Ablenkwinkel im Antriebsstrang, insbesondere in den Gelenkwellen, erreicht werden, wodurch Verlustleistungen reduziert und die Langlaufeigenschaften der Antriebswellen verbessert werden.

Vorteilhaft ist auch eine Ausbildung nach Patentanspruch 22, weil dadurch eine abgesicherte, zentrale Lage für die Lagerung des Betriebsmittels erreicht wird.

Eine vorteilhafte Weiterbildung gemäß Patentanspruch 23 ermöglicht eine Anpassung der Betriebszustände der Antriebsmotoren an sich ändernde Einsatzbedingungen während eines Einsatzes eines derartigen Feuerwehrfahrzeuges.

Vorteilhafte Ausbildungen beschreiben auch die Patentansprüche 24 und 25, wodurch eine Synchronisation bzw. eine an die Betriebsverhältnisse angepaßte Leistungsregelung der Antriebsmotoren erreicht wird.

Nach einer vorteilhaften Weiterbildung, wie in Patentanspruch 26 beschrieben, wird ein eigenes Antriebsaggregat für Nebenaggregate, z.B. für die Löschmittelpumpe oder den Generator, eingespart.

Schließlich ist aber auch eine Ausbildung nach Patentanspruch 27 von Vorteil, wodurch eine Abstimmung auf die unterschiedlichen Erfordernisse der Antriebsleistung, z.B. zwischen der Vorder- und Hinterachse des Feuerwehrfahrzeuges und im Hinblick auf etwaige Antriebsleistungen von Nebenaggregaten, erreicht wird.

Die Erfindung wird im nachfolgenden anhand der in den Zeichnungen gezeigten Ausführungsbeispiele näher erläutert.

Es zeigen:
- Fig. 1: ein erfindungsgemäß ausgebildetes Feuerwehrfahrzeug in Seitenansicht und vereinfachter, schematischer Darstellung, teilweise geschnitten;
- Fig. 2: das Feuerwehrfahrzeug in Draufsicht, geschnitten, gemäß den Linien II - II in Fig. 1;
- Fig. 3: das Feuerwehrfahrzeug nach den Fig. 1 und 2 in Stirnansicht, geschnitten, gemäß den Linien III - III in Fig. 1;
- Fig. 4: eine andere Ausführungsvariante eines erfindungsgemäßen Feuerwehrfahrzeuges 8 x 8, in Seitenansicht und vereinfachter, schematischer Darstellung;
- Fig. 5: das Feuerwehrfahrzeug in Draufsicht, geschnitten, gemäß den Linien V - V in Fig. 4;
- Fig. 6: ein Detail einer Antriebsmotorenanordnung;
- Fig. 7: eine andere Ausführungsvariante eines erfindungsgemäßen Feuerwehrfahrzeuges in einer Schemazeichnung in Draufsicht;
- Fig. 8: eine weitere Ausführungsvariante eines erfindungsgemäßen Feuerwehrfahrzeuges in Seitenansicht, mit einer gekrümmten Ausbildung des Hauptrahmens;
- Fig. 9: eine andere Ausbildung eines erfindungsgemäßen Feuerwehrfahrzeuges mit einem selbsttragenden Fahrzeugaufbau in Stirnansicht, geschnitten und vereinfachter, schematischer Darstellung.

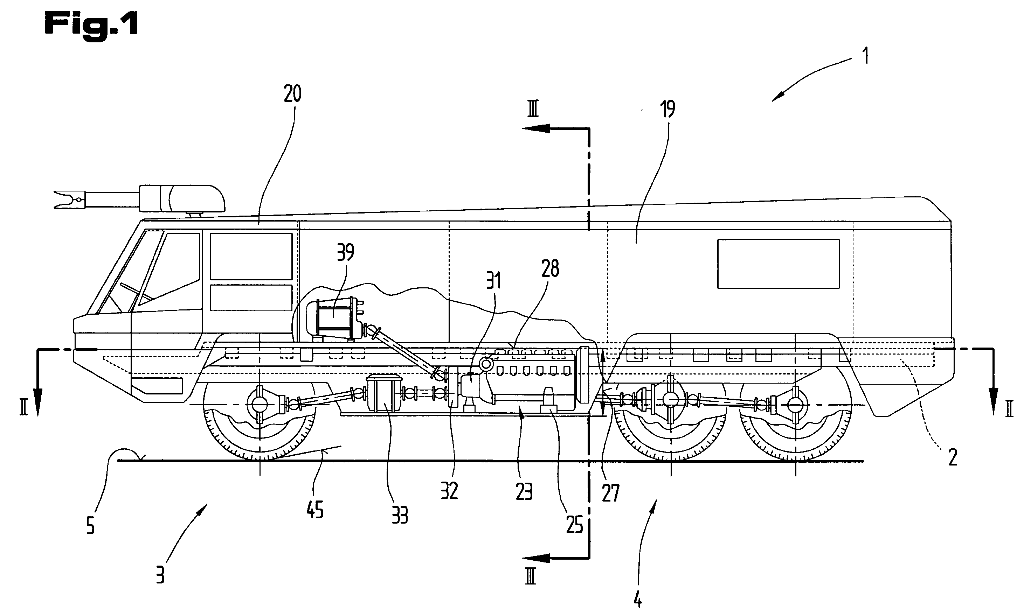

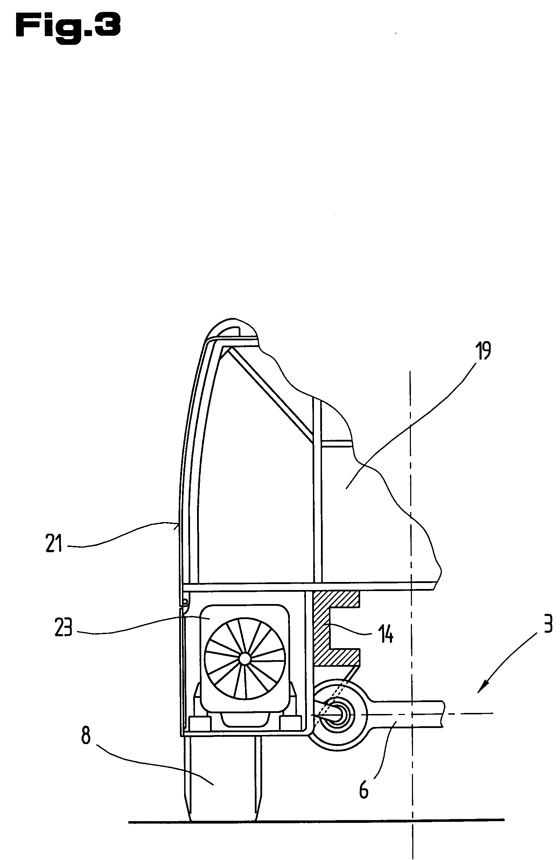

In den Fig. 1 bis 3 ist ein Feuerwehrfahrzeug 1 gezeigt, bei welchem ein Hauptrahmen 2 über ein vorderes Achsaggregat 3 und ein hinteres Achsaggregat 4 auf einer Fahrbahn 5 abgestützt ist.

Das vordere Achsaggregat 3 besteht aus einer Fahrachse 6 mit Einzelrädern 7, 8, während das hintere Achsaggregat 4 zwei Fahrachsen 9, 10 jeweils mit Einzelrädern 11, 12 aufweist. Die Fahrachsen 6, 9, 10 sind über schematisch angedeutete Federvorrichtungen 13, z.B. Luftfedern, mit dem Hauptrahmen 2 verbunden, der zwei parallel zueinander verlaufende Längsträger 14, 15 aufweist, die jeweils in einem gleichen Abstand 16 von einer Längsachse 17 des Feuerwehrfahrzeuges 1 angeordnet sind. Die Längsträger 14, 15 sind in Richtung quer zur Längsachse 17 des Fahrzeuges gekröpft und weisen von der dem vorderen Achsaggregat 3 näher liegenden Fahrachse 9 in Richtung des vorderen Achsaggregates 3 einen geringeren Abstand 18 auf, als die Summe der beiden Abstände 16. Ein Fahrzeugaufbau 19 und eine Fahrerkabine 20 sind auf dem Hauptrahmen 2 aufgesetzt und weisen fluchtende Längsseitenwände 21, 22 auf, die mit den Außenflächen der Einzelräder 7, 11 bzw. 8, 12 bündig sind oder diese überragen.

Zwischen jeder der Längsseitenwände 21, 22 und der dieser am nächsten liegenden Längsträger 14, 15 ist ein Antriebsmotor 23, 24 angeordnet. Dieser Antriebsmotor 23, 24 ist in einem Tragrahmen 25, 26 am jeweiligen Längsträger 14 bzw. 15 und zwar derart angeordnet, daß nur ein geringer Teil einer Bauhöhe 27 über eine eine Oberfläche 28 der Längsträger 14, 15 bildende Ladefläche in Richtung des Fahrzeugaufbaus 19 bzw. der Fahrerkabine 20 vorragt.

Die beiden Antriebsmotoren 23, 24 sind in um 180° verdrehter Richtung angeordnet, sodaß eine Abtriebswelle 29 des Antriebsmotors 23 gegen das vordere Achsaggregat 3 gerichtet ist, während eine Abtriebswelle 30 in Richtung des hinteren Achsaggregates 4 gerichtet ist. Der Antriebsmotor 23 ist über eine Kupplung 31 mit einem Power-Divider 32 und einem Zwischengetriebe 33 und dieses über eine Gelenkwelle 34 mit einem Achsgetriebe 35 gekuppelt. Das Achsgetriebe 35 befindet sich zwischen dem Einzelrad 8 und der Längsachse 17 des Feuerwehrfahrzeuges 1. Der Power-Divider 32 weist einen Nebenabtrieb 36 auf.

Auch der Antriebsmotor 24 ist über eine Kupplung 31 mit einem Zwischengetriebe 33 gekuppelt, welches über eine Gelenkwelle 34 mit einem Achsgetriebe 37 auf der Fahrachse 9 und über eine weitere Gelenkwelle 34 mit einem weiteren Achsgetriebe 37 auf der Fahrachse 10 gekuppelt ist.

Ein Tank 38 für das Betriebsmittel der beiden Antriebsmotoren 23, 24 befindet sich vorzugsweise zwischen den beiden Längsträgern 14, 15 des Hauptrahmens 2.

Eine mit dem Nebenabtrieb 36 mit dem Power-Divider 32 gekuppelte Löschmittelpumpe 39 ist bevorzugt oberhalb der Antriebsmotoren 23, 24 im Fahrzeugaufbau 19 angeordnet. Bevorzugt erstreckt sich eine Antriebswelle dieser Löschmittelpumpe 39 in Längsrichtung zur Längsachse 17 des Feuerwehrfahrzeuges 1.

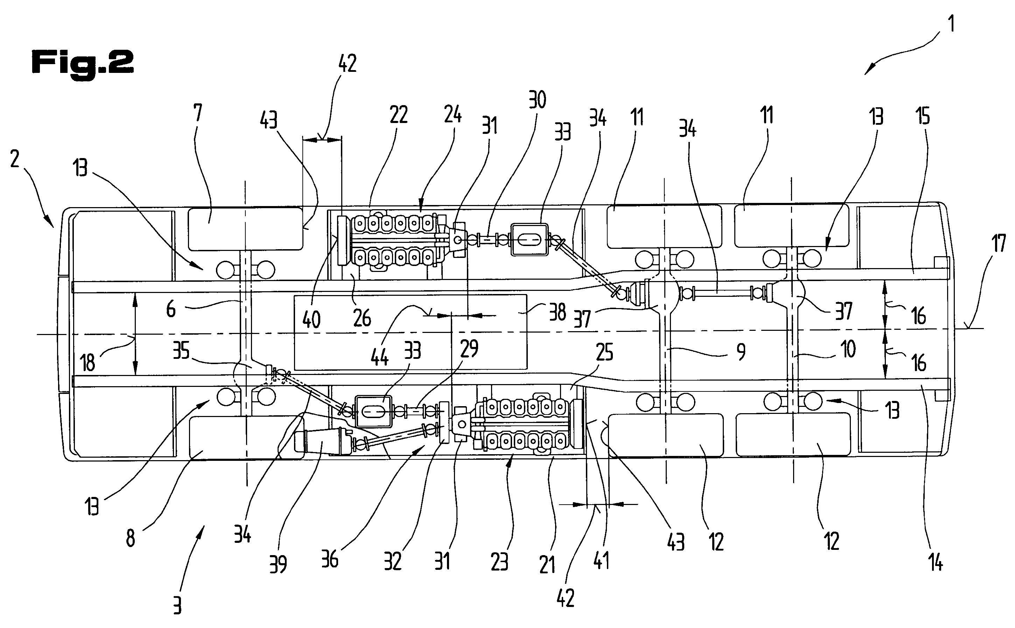

Wie am besten aus der zeichnerischen Darstellung in Fig. 2 ersichtlich ist, ist eine Stirnseite 40, 41 der beiden Antriebsmotoren 23, 24 in einem geringen Abstand 42 von einer Lauffläche 43 der nächstliegenden Einzelräder 11 bzw. 8 angeordnet, sodaß die einander zugewandten Stirnseiten der beiden Antriebsmotoren 23, 24 in einem Abstand 44 angeordnet sind. Durch eine Versetzung der beiden Antriebsmotoren 23, 24 in Richtung der Längsachse 17 des Feuerwehrfahrzeuges 1 überdecken sich lediglich die Kupplungen 31 bzw. Zwischengetriebe 33, die üblicherweise eine geringere Bauhöhe aufweisen als die Bauhöhe 27 der Antriebsmotoren 23, 24, sodaß dieser Bereich zur Erreichung eines ausreichenden Böschungswinkels, der schematisch durch die Linie 45 angezeigt ist, genutzt werden kann. Damit ist eine derart tiefe Anordnung der Antriebsmotoren 23, 24 möglich, ohne daß der für derartige Fahrzeuge vorgeschriebene Mindestböschungswinkel von 25° zwischen den einzelnen Achsaggregaten 3, 4 unterschritten wird.

Durch die Anordnung der Antriebsmotoren 23, 24 auf den gegeneinander gegenüberliegenden und voneinander abgewendeten Längsseiten der Längsträger 14, 15 wird in Bezug auf die Querbelastung einerseits ein Gewichtsausgleich erzielt und andererseits durch die neue Zuordnung zu den Achsaggregaten 3, 4 das Hauptgewicht der Antriebsmotoren 23, 24 gleichmäßig auf das vordere und hintere Achsaggregat 3, 4 aufgeteilt.

Durch die um 180° verdrehte Anordnung der Antriebsmotoren 23, 24 wird auch ein günstiger Schwungmassenausgleich erreicht, sodaß die auf den Hauptrahmen 2 einwirkende Schwingungsbelastung relativ gering ist.

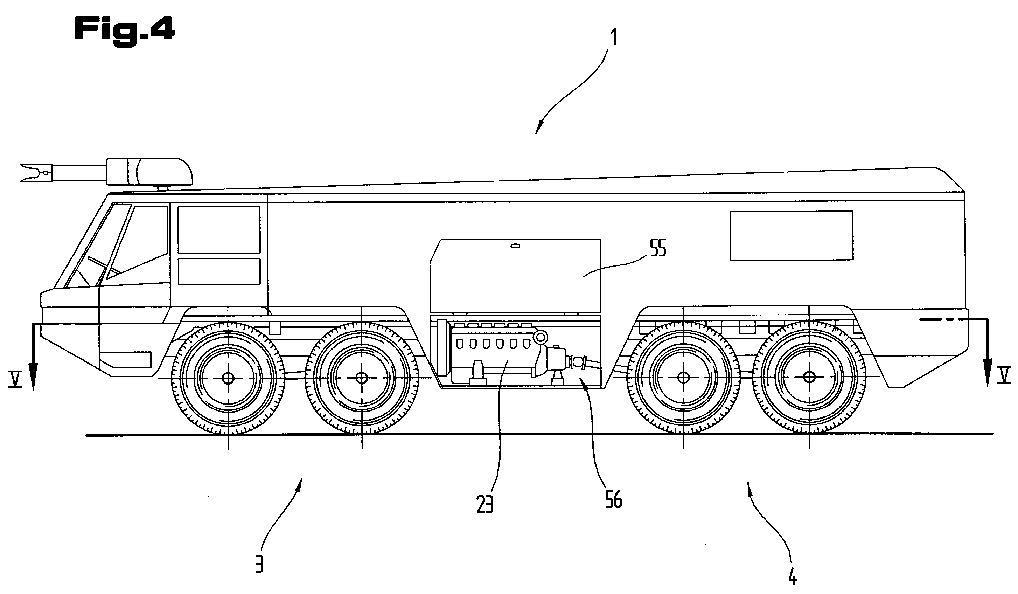

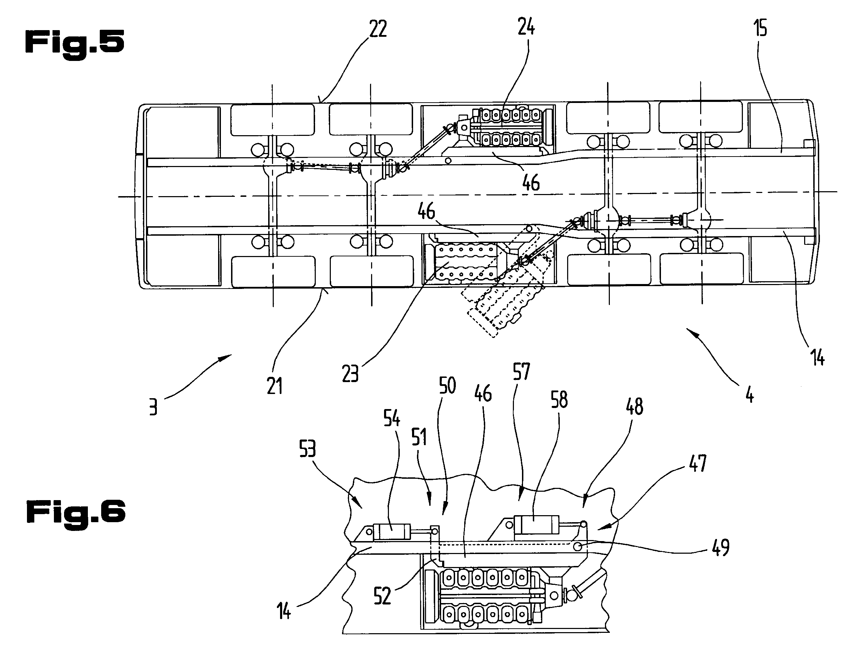

In den Fig. 4 bis 6 ist eine weitere Ausbildung des Feuerwehrfahrzeuges 1 gezeigt. Bei diesem sind die Achsaggregate 3, 4 jeweils durch Doppelachsen gebildet. Die Antriebsmotoren 23, 24 sind im Bereich zwischen den Achsaggregaten 3, 4 und zwischen den Längsträgern 14, 15 und den Längsseitenwänden 21, 22 angeordnet. Die Antriebsmotoren 23, 24 sind auf parallel zu den Längsträgern 14, 15 verlaufenden Hilfsrahmen 46 befestigt, die in einem Endbereich 47 über eine Schwenklageranordnung 48 um eine, in etwa senkrecht zur Fahrbahn 5 verlaufende Schwenkachse 49 an den Längsträgern 14, 15 verschwenkbar angelenkt sind. In einem entgegengesetzten Endbereich 50 ist der Hilfsrahmen 46 in seiner eingeschwenkten Position über eine am Längsträger 14 angeordnete Verriegelungsvorrichtung 51 gegenüber diesem festlegbar. Diese Verriegelungsvorrichtung 51 wird durch eine in Längsrichtung des Längsträgers 14 verschiebbare Sperrklaue 52 gebildet, die über einen Linearantrieb 53, z.B. druckbeaufschlagten Zylinder 54, angetrieben wird. Die Längsseitenwand 21 des Feuerwehrfahrzeuges 1 weist im Bereich der Antriebsmotoren 23, 24 durch eine Klappe 55 verschließbare Öffnungen 56 auf, um z.B. Wartungsarbeiten an den Antriebsmotoren 23, 24 vornehmen zu können. Anstelle der Klappe 55 ist natürlich auch die Anordnung einer Rolljalousie etc. möglich. Für die Vornahme größerer Arbeiten am Antriebsmotor 23 besteht bei dieser Ausführung die Möglichkeit, nach dem Auftrennen des Antriebsstranges den Antriebsmotor 23 nach Entriegelung der Sperrklaue 52 mittels des Hilfsrahmens 46 in eine Position zu verschwenken, bei der sich der Antriebsmotor 23 nahezu zur Gänze außerhalb der Längsseitenwand 21 befindet, wie dies in der Fig. 5 in strichlierten Linien gezeigt ist.

Selbstverständlich ist es auch möglich, für den Verschwenkvorgang eine Antriebsvorrichtung 57, z.B. einen druckbeaufschlagten Schwenkzylinder 58, vorzusehen.

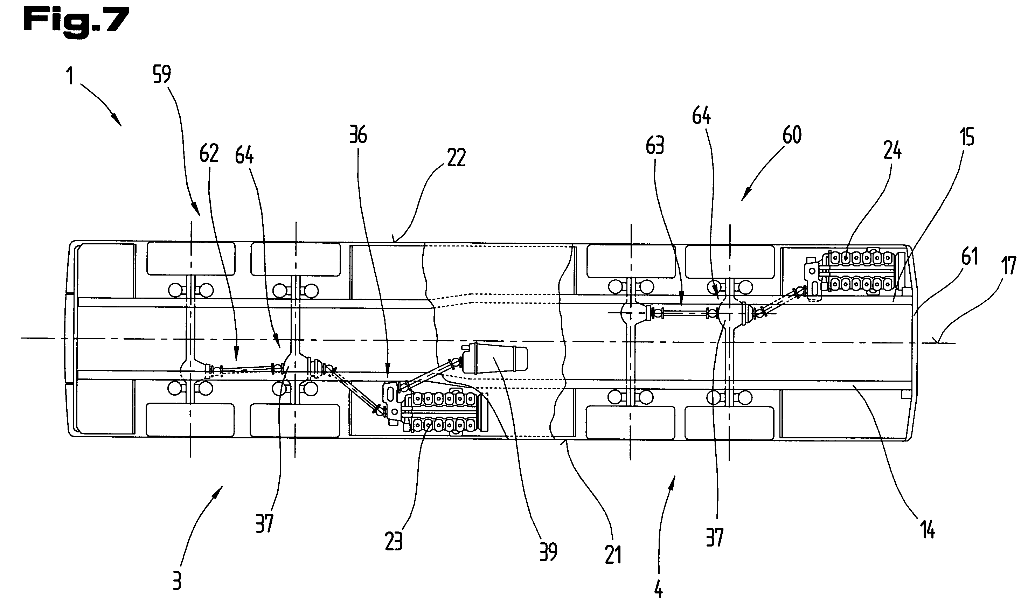

In der Fig. 7 ist eine weitere Ausführung des Feuerwehrfahrzeuges 1 gezeigt. Bei diesem sind die Achsaggregate 3, 4 als Doppelachsaggregate 59, 60 ausgebildet und jedem dieser Doppelachsaggregate 59, 60 ist einer der Antriebsmotoren 23, 24 zugeordnet. Die Antriebsmotoren 23, 24 sind jeweils zwischen den Längsträgern 14, 15 und den Längsseitenwänden 21, 22 mit ihrer Längserstreckung parallel zur Längsachse 17 angeordnet. Bei dieser Ausführung ist der Antriebsmotor 23, insbesondere der dem frontseitigen Doppelachsaggregat 59 zugeordnete, im Bereich zwischen den Achsaggregaten 3, 4 am Längsträger 14 befestigt. Der Antriebsmotor 23 weist auch den Nebenabtrieb 36 für den Antrieb der Löschmittelpumpe 39 auf. Der weitere Antriebsmotor 24, der dem heckseitig angeordneten Achsaggregat 4 zugeordnet ist, ist im Bereich zwischen dem Achsaggregat 4 und einer Rückwand 61 am Längsträger 15 befestigt. Bei dieser Ausführung erfolgt der Antrieb wahlweise auf jeweils eine oder beide Achsen der Doppelachsaggregate 59, 60. Dazu sind im Verlauf von die Doppelachsaggregate 59, 60 verbindenden Antriebssträngen 62, 63 bzw. der Achsgetriebe 37 schaltbare Sperreinrichtungen 64 vorgesehen. Damit ist wahlweise ein permanenter Antrieb der Doppelachsaggregate 59, 60 möglich. Damit ist jedoch auch ein Betrieb des Feuerwehrfahrzeuges 1 mit nur einem der Antriebsmotoren 23, 24 möglich. Selbstverständlich ist es möglich, daß einer der Antriebsmotoren 23, 24 zwischen den Achsaggregaten 3, 4 und der weitere Antriebsmotor 23, 24 außerhalb der voneinander abgewendeten, am weitesten voneinander distanzierten Fahrachsen 6, 10 angeordnet ist.

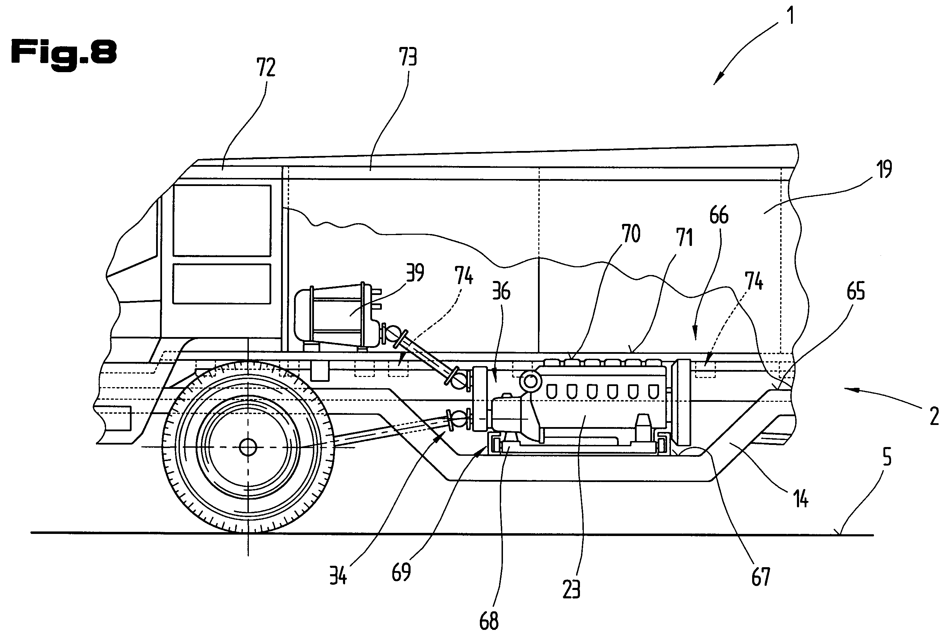

In der Fig. 8 ist eine andere Ausführung des Feuerwehrfahrzeuges 1 gezeigt, bei dem der Längsträger 14 im Bereich des Antriebsmotors 23 in Richtung der Fahrbahn 5 gekröpft ausgebildet ist. Damit wird ein, gegenüber einer den Fahrzeugaufbau 19 tragenden Oberfläche 65 in Richtung der Fahrbahn 5 abgesenkter Aufnahmebereich 66 für den Antriebsmotor 23 ausgebildet. Auf einer Oberseite 67 des Längsträgers 14 ist im Aufnahmebereich 66 ein Tragrahmen 68 für den Antriebsmotor 23 angeordnet, der in Führungsanordnungen 69 in zur Längsrichtung des Feuerwehrfahrzeuges 1 quer verlaufender Richtung verschiebbar geführt ist. Die Führungsanordnungen 69 können z.B. als Teleskopführungen ausgebildet sein, wodurch ein ausreichender Verschiebeweg für den Antriebsmotor 23 gebildet wird, um diesen z.B. für Reparatur- oder Wartungsarbeiten nach dem Lösen der Gelenkwelle 34 frei zugänglich zu verschieben. Durch die Kröpfung des Längsträgers 14 und Schaffung des Aufnahmebereiches 66 ist eine Anordnung des Antriebsmotors 23 möglich, bei der dieser mit einer Oberkante 70 eine Ladefläche 71 des Fahrzeugaufbaues 19 nicht überragt. Wie bereits bei den vorhergehenden Figuren beschrieben, weist der Antriebsmotor 23 den Nebenabtrieb 36 auf, der mit der auf der Ladefläche 71 angeordneten Löschmittelpumpe 39 antriebsverbunden ist.

Die Ladefläche 71 erstreckt sich dabei oberhalb der Antriebsmotoren 23, 24 quer zur Fahrzeuglängsrichtung bis in den Bereich der Längsseitenwände 21, 22 des Feuerwehrfahrzeuges 1.

Der Fahrzeugaufbau 19 besteht im gezeigten Ausführungsbeispiel aus einer Fahrzeugkabine 72 für Fahrer und Mitfahrer und einer Ausrüstungskabine 73, die auch einen oder mehrere Tanks für Chemikalien und/oder Löschwasser umfassen kann. Die Fahrzeugkabine 72 und Ausrüstungskabine 73 sind als unabhängige Fertigmodule konzipiert und jeweils über Dämpfungselemente 74 am Hauptrahmen 2 bzw. den Längsträgern 14, 15 abgestützt. Damit wird eine sehr einfache und individuelle Gestaltung des Feuerwehrfahrzeuges 1 durch die Verwendung unterschiedlicher vorgefertigter Module für die Fahrzeugkabine 72 und Ausrüstungskabine 73 ermöglicht. Gegebenenfalls ist auch ein rasches Umrüsten des Feuerwehrfahrzeuges 1 und eine Anpassung an vorgegebene Einsatzbedingungen möglich, insbesondere dann, wenn die Ausrüstungskabine 73 als sogenannter Wechselaufbau mit den entsprechenden Verankerungs- und Kupplungselementen für ein rasches Aufsetzen auf den Hauptrahmen 2 versehen ist.

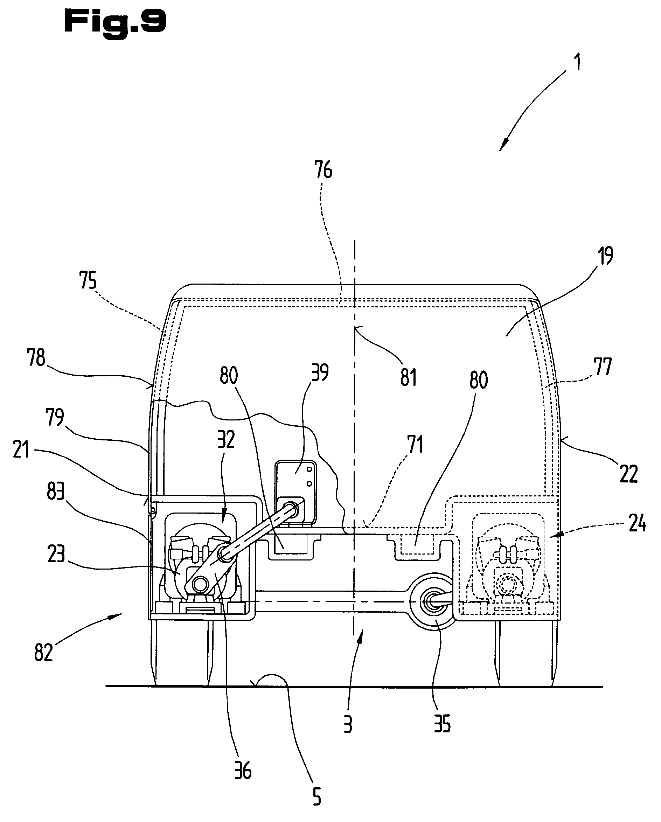

In der Fig. 9 ist eine weitere Ausführungsvariante des Feuerwehrfahrzeuges 1 gezeigt. Bei diesem ist der Fahrzeugaufbau 19 als selbsttragender Kastenaufbau ausgebildet, der im wesentlichen aus einem tragenden Gerippe 75 gebildet und aus miteinander verbundenen Holmen 76 und Streben 77 verwindungs- und biegesteif ausgebildet ist. Das Gerippe 75 des Fahrzeugaufbaus 19 ist zur Bildung von Außenflächen 78 mit Verkleidungselementen 79 versehen. Der gesamte Fahrzeugaufbau 19 kann dabei aus Kunststoff, Metall oder aus einer Kombination dieser Materialien hergestellt sein. Die selbsttragende Ausbildung ermöglicht die direkte Abstützung des Fahrzeugaufbaues 19 über Feder- und/oder Dämpfungselemente 80 auf den Achsaggregaten 3, 4.

Im Bereich der Längsseitenwände 21, 22 weist das Feuerwehrfahrzeug 1 im Bereich zwischen den Achsaggregaten 3, 4 in etwa symmetrisch zu einer zur Fahrbahn 5 senkrecht verlaufenden Längsmittelebene 81 angeordnete, die Ladefläche 71 in Richtung der Fahrbahn 5 überragende, satteltaschenförmige Motorgondeln 82 auf. In diesen Motorgondeln 82, die über in den Verkleidungselementen 79 angeordnete, zu öffnende Verschlußklappen 83 zugänglich sind, sind die Antriebsmotoren 23, 24 in Längsrichtung des Feuerwehrfahrzeuges 1 erstreckend angeordnet und mit den Achsaggregaten 3, 4 bzw. mit den Achsgetrieben 35 antriebsverbunden. Die Antriebsmotoren 23, 24 können dabei auf den Tragrahmen 68, der mit der Motorgondel 82 verbunden ist, aufgesetzt werden. Der Tragrahmen 68 ist dabei über einen Schnellverschluß mit dem Fahrzeugaufbau 19 bzw. dem Hauptrahmen 2 gekuppelt, wodurch ein rasches Ausschwenken der Antriebsmotoren 23, 24 erreicht wird. Zumindest einer der Antriebsmotoren 23, 24 weist darüber hinaus den Nebenabtrieb 36 mit dem Power-Divider 32 auf, der mit der im Innenraum des Fahrzeugaufbaues 19 angeordneten Löschmittelpumpe 39 oder einem Generator etc. antriebsverbunden ist.

Der Fahrzeugaufbau 19 ist in seinem Innenraum mit Trennwänden und verschiedenen Einbauten versehen, um eine Fahrerkabine, Gerätekabine, Tank etc. auszubilden. Selbstverständlich ist es möglich, daß der Tragrahmen 25, 26 für die Antriebsmotoren 23, 24 der Höhe und/oder der Seite nach verstellbar am Fahrzeugaufbau 19 bzw. am Hauptrahmen 2 gelagert ist.

Die Motorgondeln 82 können aber auch als vom Fahrzeugaufbau 19 unabhängige Baukörper und mit diesem kuppelbar ausgebildet sein. In Verbindung mit einer Hubeinrichtung, z.B. Spindelantriebe, wird eine Ausführung ermöglicht, bei der die Motorgondeln 82 zur besseren Zugänglichkeit der Antriebsmotoren 23, 24 auf das Niveau der Fahrbahn 5 nach dem Lösen der Antriebsstränge 62,63 abgesenkt werden können. Eine derartige Ausführung mit sogenannten, als Hubgondeln ausgebildeten Motorgondeln 82 ermöglicht auch den raschen Austausch der Antriebsmotoren 23, 24 im Falle von technischen Gebrechen sowie eine gute Zugänglichkeit zur Vornahme von Wartungs-und Reparaturarbeiten.

Selbstverständlich ist es möglich, daß in den zuvor beschriebenen Fig. 1 bis 9 die Antriebsmotoren 23, 24 über eine zentrale Steuervorrichtung miteinander verbunden sind. Die Steuervorrichtung kann weiters Sensoren aufweisen, die beispielsweise an den einzelnen Einzelrädern 7, 8, 11, 12 angeordnet sind, wodurch aufgrund der Sensoren die Drehzahl der einzelnen Einzelräder 7, 8, 11, 12 erfaßt und durch entsprechende Steuerung über die Steuervorrichtung die Antriebsmotoren 23, 24 geregelt werden, d.h., daß z.B. die Antriebsleistung der einzelnen Antriebsmotoren 23, 24 in Abhängigkeit von den mittels der Sensoren ermittelten Drehzahl der Einzelräder 7, 8, 11, 12 der einzelnen Fahrachsen 6, 9, 10 geregelt wird. Dabei ist es selbstverständlich möglich, daß die Antriebsmotoren unterschiedliche Leistungen bzw. unterschiedliche Größen aufweisen können.

Selbstverständlich ist es möglich, daß die in den Fig. 1 bis 9 beschriebenen Ausführungsformen durch entsprechende weitere Anordnungen der Antriebsmotoren 23, 24 ausgeführt werden können, wobei beispielsweise die Antriebsmotoren 23, 24, bezogen auf die Längsachse 17, mit einem Abstand nebeneinander angeordnet sind oder daß die beiden Antriebsmotoren 23, 24 in Richtung der Längsachse 17 gegeneinander versetzt sind. Weiters ist es auch möglich, daß die beiden Antriebsmotoren 23, 24 parallel zueinander ausgerichtet sind oder daß die beiden Antriebsmotoren 23, 24 zwischen zwei in Längsrichtung des Fahrzeuges hintereinander und voneinander distanziert angeordneten Achsaggregaten 3, 4 angeordnet werden.

Weiters ist es auch möglich, daß Teile der Antriebsmotoren 23, 24, wie z.B. die Kupplungen 31 und/oder das Zwischengetriebe 33, sich in Richtung der Längsachse 17 des Fahrzeuges überlappen. Ebenfalls ist es möglich, daß die Antriebsmotoren 23, 24 über eine die der Längsachse 17 des Fahrzeuges zugewandten Fläche der Einzelräder 7, 8, 11, 12 der Fahrachsen 9, 10 tangierende Ebene in Richtung der äußeren Seitenflächen der Einzelräder 7, 8, 11, 12 zumindest zum Teil vorragen.

Abschließend sei der Ordnung halber noch darauf hingewiesen, daß einzelne Merkmale der einzelnen Ausführungsbeispiele mit anderen Einzelmerkmalen von anderen Ausführungsbeispielen oder jeweils für sich allein den Gegenstand von eigenständigen Erfindungen bilden.

Vor allem können die einzelnen in den Fig. 1 bis 3; 4 bis 6; 7; 8; 9 gezeigten Ausführungen den Gegenstand von eigenständigen, erfindungsgemäßen Lösungen bilden. Die diesbezüglichen erfindungsgemäßen Aufgaben und Lösungen sind den Detailbeschreibungen dieser Figuren zu entnehmen.

### Bezugszeichenaufstellung

- 1: Feuerwehrfahrzeug
- 2: Hauptrahmen
- 3: Achsaggregat
- 4: Achsaggregat
- 5: Fahrbahn
- 6: Fahrachse
- 7: Einzelrad
- 8: Einzelrad
- 9: Fahrachse
- 10: Fahrachse
- 11: Einzelrad
- 12: Einzelrad
- 13: Federvorrichtung
- 14: Längsträger
- 15: Längsträger
- 16: Abstand
- 17: Längsachse
- 18: Abstand
- 19: Fahrzeugaufbau
- 20: Fahrerkabine
- 21: Längsseitenwand
- 22: Längsseitenwand
- 23: Antriebsmotor
- 24: Antriebsmotor
- 25: Tragrahmen
- 26: Tragrahmen
- 27: Bauhöhe
- 28: Oberfläche
- 29: Abtriebswelle
- 30: Abtriebswelle
- 31: Kupplung
- 32: Power-Divider
- 33: Zwischengetriebe
- 34: Gelenkwelle
- 35: Achsgetriebe
- 36: Nebenabtrieb
- 37: Achsgetriebe
- 38: Tank
- 39: Löschmittelpumpe
- 40: Stirnseite
- 41: Stirnseite
- 42: Abstand
- 43: Lauffläche
- 44: Abstand
- 45: Linie
- 46: Hilfsrahmen
- 47: Endbereich
- 48: Schwenklageranordnung
- 49: Schwenkachse
- 50: Endbereich
- 51: Verriegelungsvorrichtung
- 52: Sperrklaue
- 53: Linearantrieb
- 54: Zylinder
- 55: Klappe
- 56: Öffnung
- 57: Antriebsvorrichtung
- 58: Schwenkzylinder
- 59: Doppelachsaggregat
- 60: Doppelachsaggregat
- 61: Rückwand
- 62: Antriebsstrang
- 63: Antriebsstrang
- 64: Sperreinrichtung
- 65: Oberfläche
- 66: Aufnahmebereich
- 67: Oberseite
- 68: Tragrahmen
- 69: Führungsanordnung
- 70: Oberkante
- 71: Ladefläche
- 72: Fahrzeugkabine
- 73: Ausrüstungskabine
- 74: Dämpfungselement
- 75: Gerippe
- 76: Holm
- 77: Strebe
- 78: Außenfläche
- 79: Verkleidungselement
- 80: Feder- und/oder Dämpfungselement
- 81: Längsmittelebene
- 82: Motorgondel
- 83: Verschlußklappe

## Patentansprüche

1. Feuerwehrfahrzeug, insbesondere Flughafenlöschfahrzeug, mit mindestens zwei beidseits einer Längsachse angeordneten Antriebsmotoren, die jeweils über ein Getriebe mit zumindest einer Fahrachse und/oder einem Nebenabtrieb kuppelbar sind wobei der Nebenabtrieb (36) mit einer Löschmittelpumpe (39) und/oder einem Generator gekuppelt ist, dadurch gekennzeichnet, daß zumindest ein Großteil der Bauhöhe (27) der Antriebsmotoren (23, 24) sich unterhalb einer, der dem Fahrzeugaufbau (19) zugewandten Oberseite der Einzelräder (7, 8, 11, 12) der Fahrachsen (6, 9, 10) tangierenden Ebene befinden, wobei die Antriebsmotoren (23, 24) in um 180° verdrehter Lage im Fahrzeug angeordnet sind, und sich eine Ladefläche (71) oberhalb der Antriebsmotoren (23, 24) quer zur Fahrzeuglängsrichtung bis in den Bereich der Längsseitenwände (21, 22) des Fahrzeuges erstreckt.

2. Feuerwehrfahrzeug nach Anspruch 1, dadurch gekennzeichnet, daß die beiden Antriebsmotoren (23, 24), bezogen auf die Längsachse (17), mit Abstand nebeneinander angeordnet sind.

3. Feuerwehrfahrzeug nach Anspruch 1 oder 2, dadurch gekennzeichnet, daß die beiden Antriebsmotoren (23, 24) in Richtung der Langsachse (17) gegeneinander versetzt sind.

4. Feuerwehrfahrzeug nach einem oder mehreren der Ansprüche 1 bis 3, dadurch gekennzeichnet, daß die beiden Antriebsmotoren (23, 24) parallel zueinander ausgerichtet sind.

5. Feuerwehrfahrzeug nach einem oder mehreren der Ansprüche 1 bis 4, dadurch gekennzeichnet, daß die beiden Antriebsmotoren (23, 24) zwischen zwei in Längsrichtung des Fahrzeuges hintereinander und voneinander distanziert angeordneten Achsaggregaten (3, 4) angeordnet sind.

6. Feuerwehrfahrzeug nach einem oder mehreren der Ansprüche 1 bis 5, dadurch gekennzeichnet, daß Teile der Antriebsmotoren (23, 24) bzw. der Kupplungen (31) und/oder Zwischengetriebe (33) sich in Richtung der Längsachse (17) des Fahrzeuges überlappen.

7. Feuerwehrfahrzeug nach einem oder mehreren der Ansprüche 1 bis 6, dadurch gekennzeichnet, daß die Antriebsmotoren (23, 24) über eine, die der Längsachse (17) des Fahrzeuges zugewandten Flächen der Einzelräder (7, 8, 11, 12) der Fahrachsen (9, 10) tangierende Ebene in Richtung der äußeren Seitenflächen der Einzelräder (7, 8, 11, 12) zumindest zum Teil vorragen.

8. Feuerwehrfahrzeug nach einem oder mehreren der Ansprüche 1 bis 7, dadurch gekennzeichnet, daß eine von der Längsachse (17) des Fahrzeuges abgewandte Seitenfläche der Antriebsmotoren (23, 24) innerhalb oder bündig mit einer Längsseitenwand (21, 22) des Fahrzeugaufbaus (19) ist.

9. Feuerwehrfahrzeug nach einem oder mehreren der Ansprüche 1 bis 8, dadurch gekennzeichnet, daß die Achsaggregate (3, 4) auf einem durchgehenden Hauptrahmen (2) angeordnet sind, der zwei in Längsrichtung des Fahrzeuges verlaufende, zur Längsachse (17) voneinander distanzierte, parallel zueinander verlaufende Längsträger (14, 15) aufweist und daß je einer der Antriebsmotoren (23, 24) zwischen je einem der beiden Längsträger (14, 15) und einer Längsseitenwand (21, 22) des Fahrzeuges angeordnet ist.

10. Feuerwehrfahrzeug nach einem oder mehreren der Ansprüche 1 bis 9, dadurch gekennzeichnet, daß die Antriebsmotoren (23, 24) unterhalb einer, einer Ladefläche (71) zugeordneten Oberkante der Längsträger (14, 15) angeordnet sind.

11. Feuerwehrfahrzeug nach einem oder mehreren der Ansprüche 1 bis 10, dadurch gekennzeichnet, daß einer der Antriebsmotoren (23, 24) zwischen den Achsaggregaten (3, 4) und zumindest ein weiterer Antriebsmotor (23, 24) außerhalb der voneinander abgewendeten, der am weitesten von einander distanzierten Fahrachsen (6, 10) der Fahraggregate angeordnet ist.

12. Feuerwehrfahrzeug nach einem oder mehreren der Ansprüche 1 bis 11, dadurch gekennzeichnet, daß die Löschmittelpumpe (39) oberhalb zumindest eines der beiden Antriebsmotoren (23, 24) angeordnet ist.

13. Feuerwehrfahrzeug nach einem oder mehreren der Ansprüche 1 bis 12, dadurch gekennzeichnet, daß ein Abstand (18) quer zur Längsrichtung des Fahrzeuges zwischen den Längsträgern (14, 15) im Bereich der beiden Antriebsmotoren (23, 24) geringer ist als im Bereich zumindest eines der Achsaggregate (4).

14. Feuerwehrfahrzeug nach einem oder mehreren der Ansprüche 1 bis 13, dadurch gekennzeichnet, daß die Längsträger (14, 15) im Bereich der Antriebsmotoren (23, 24) in Höhenrichtung gekröpft sind.

15. Feuerwehrfahrzeug nach einem oder mehreren der Ansprüche 1 bis 14, dadurch gekennzeichnet, daß der Fahrzeugaufbau (19) als selbsttragender Kastenträger ausgebildet ist und ein Tragrahmen (25, 26) für die Antriebsmotoren (23,24) am Fahrzeugaufbau (19) befestigt oder in diesem integriert ist.

16. Feuerwehrfahrzeug nach einem oder mehreren der Ansprüche 1 bis 15, dadurch gekennzeichnet, daß der Tragrahmen (25, 26) im Bereich von Unterflurkästen des Fahrzeugaufbaus (19) angeordnet ist.

17. Feuerwehrfahrzeug nach einem oder mehreren der Ansprüche 1 bis 16, dadurch gekennzeichnet, daß der Tragrahmen (25, 26) für den Antriebsmotor (23, 24) der Höhe und/oder Seite nach verstellbar im Fahrzeugaufbau (19) bzw. am Hauptrahmen (2) gelagert ist.

18. Feuerwehrfahrzeug nach einem oder mehreren der Ansprüche 1 bis 17, dadurch gekennzeichnet, daß ein Hilfsrahmen (46) um eine zur Ladefläche (71) vertikale Schwenkachse (49) in Richtung quer zur Längsachse (17) ausschwenkbar ist.

19. Feuerwehrfahrzeug nach einem oder mehreren der Ansprüche 1 bis 18, dadurch gekennzeichnet, daß ein Tragrahmen (68) als selbsttragende Motorgondel (82) für den Antriebsmotor (23, 24) ausgebildet ist.

20. Feuerwehrfahrzeug nach einem oder mehreren der Ansprüche 1 bis 19, dadurch gekennzeichnet, daß der Tragrahmen (68) bzw. die Motorgondel (82) über Schnellverschlüsse mit dem Fahrzeugaufbau (19) bzw. dem Hauptrahmen (2) gekuppelt ist.

21. Feuerwehrfahrzeug nach einem oder mehreren der Ansprüche 1 bis 20, dadurch gekennzeichnet, daß Achsgetriebe (35, 37) der einzelnen Fahrachsen (6, 9, 10) der Achsaggregate (3, 4) zur Längsachse (17) des Fahrzeugs seitlich versetzt angeordnet sind und eine Distanz der Eingangswelle der Achsgetriebe (35, 37) und der Längsachse (17) des Fahrzeuges in etwa der Hälfte der Distanz zwischen der Längsachse (17) des Fahrzeuges und einer Mittelachse der Antriebsmotoren (23, 24) entspricht.

22. Feuerwehrfahrzeug nach einem oder mehreren der Ansprüche 1 bis 21, dadurch gekennzeichnet, daß ein Tank (38) für das Betriebsmittel der Antriebsmotoren (23, 24) zwischen den beiden Antriebsmotoren (23, 24) angeordnet ist.

23. Feuerwehrfahrzeug nach einem oder mehreren der Ansprüche 1 bis 22, dadurch gekennzeichnet, daß die Antriebsmotoren (23, 24) mit einer zentralen Steuervorrichtung verbunden sind.

24. Feuerwehrfahrzeug nach einem oder mehreren der Ansprüche 1 bis 23, dadurch gekennzeichnet, daß die Steuervorrichtung mit Sensoren für die Drehzahl der Einzelräder (7, 8, 11, 12) zusammengeschaltet ist.

25. Feuerwehrfahrzeug nach einem oder mehreren der Ansprüche 1 bis 24, dadurch gekennzeichnet, daß die Antriebsleistung der einzelnen Antriebsmotoren (23, 24) in Abhängigkeit von den mittels den Sensoren ermittelten Drehzahlen der Einzelräder (7, 8, 11, 12) der einzelnen Fahrachsen (6, 9, 10) geregelt ist.

26. Feuerwehrfahrzeug nach einem oder mehreren der Ansprüche 1 bis 25, dadurch gekennzeichnet, daß zwischen zumindest einem der Antriebsmotoren (23, 24) und einer Fahrachse (6, 9, 10) ein Power-Divider (32) angeordnet ist, das über einen Nebenabtrieb (36) mit der Löschmittelpumpe (39) und/oder dem Generator verbunden ist.

27. Feuerwehrfahrzeug nach einem oder mehreren der Ansprüche 1 bis 26, dadurch gekennzeichnet, daß die Antriebsmotoren (23, 24) eine unterschiedliche Größe bzw. Antriebsleistung aufweisen.

## Claims

1. Fire-fighting vehicle, especially for airports, with at least two drive motors arranged on either side of a longitudinal axis, which can be coupled respectively by a transmission with at least one drive axle and/or an auxiliary output, wherein the auxiliary output (36) is coupled with a fire-extinguishing agent pump (39) and/or a generator, characterised in that at least a large portion of the overall height (27) of the drive motors (23, 24) is below a plane which is tangential to the top of the individual wheels (7, 8, 11, 12) of the drive axles (6, 9, 10) facing the vehicle structure (19), wherein the drive motors (23, 24) are arranged in the vehicle in a position rotated by 180°, and a loading surface (71) above the drive motors (23, 24) extends at right angles to the longitudinal direction of the vehicle into the region of the longitudinal side walls (21, 22) of the vehicle.

2. Fire-fighting vehicle according to claim 1, characterised in that the two drive motors (23, 24) are arranged spaced apart adjacent to one another with respect to the longitudinal axis (17).

3. Fire-fighting vehicle according to claim 1 or 2, characterised in that the two drive motors (23, 24) are offset relative to one another in the direction of the longitudinal axis (17).

4. Fire-fighting vehicle according to one or more of claims 1 to 3, characterised in that the two drive motors (23, 24) are aligned parallel to one another.

5. Fire-fighting vehicle according to one or more of claims 1 to 4, characterised in that the two drive motors (23, 24) are arranged between two axle assemblies (3, 4) arranged behind one another in the longitudinal direction of the vehicle and spaced apart from one another.

6. Fire-fighting vehicle according to one or more of claims 1 to 5, characterised in that parts of the drive motors (23, 24) or the couplings (31) and/or intermediate transmissions (33) overlap in the direction of the longitudinal axis (17) of the vehicle.

7. Fire-fighting vehicle according to one or more of claims 1 to 6, characterised in that the drive motors (23, 24) project at least partly over a plane tangential to the surfaces of the individual wheels (7, 8, 11, 12) of the drive axles (9, 10) facing the longitudinal axis (17) of the vehicle in the direction of the outer side surfaces of the individual wheels (7, 8, 11, 12).

8. Fire-fighting vehicle according to one or more of claims 1 to 7, characterised in that a side face of the drive motors (23, 24) opposite the longitudinal axis (17) of the vehicle is inside or flush with a longitudinal side wall (21, 22) of the vehicle structure (19).

9. Fire-fighting vehicle according to one or more of claims 1 to 8, characterised in that the axle assemblies (3, 4) are arranged on a through main frame (2) which comprises two parallel longitudinal members (14, 15) running in the longitudinal direction of the vehicle and spaced apart from one another relative to the longitudinal axis (17), and in that each of the drive motors (23, 24) is arranged between one of the two longitudinal carriers (14, 15) and a longitudinal side wall (21, 22) of the vehicle.

10. Fire-fighting vehicle according to one or more of claims 1 to 9, characterised in that the drive motors (23, 24) are arranged underneath a top edge of the longitudinal members (14, 15) assigned to a loading surface (71).

11. Fire-fighting vehicle according to one or more of claims 1 to 10, characterised in that one of the drive motors (23, 24) is arranged between the axle assemblies (3, 4) and at least one additional drive motor (23, 24) is arranged outside the opposite facing drive axles (6, 10) of the axle assemblies spaced farthest apart from one another.

12. Fire-fighting vehicle according to one or more of claims 1 to 11, characterised in that the fire-extinguishing agent pump (39) is arranged above at least one of the two drive motors (23, 24).

13. Fire-fighting vehicle according to one or more of claims 1 to 12, characterised in that the distance (18) perpendicular to the longitudinal direction of the vehicle between the longitudinal members (14, 15) is smaller in the region of the two drive motors (23, 24) than in the region of at least one of the axle assemblies (4).

14. Fire-fighting vehicle according to one or more of claims 1 to 13, characterised in that the longitudinal members (14, 15) are offset vertically in the region of the drive motors (23, 24).

15. Fire-fighting vehicle according to one or more of claims 1 to 14, characterised in that the vehicle structure (19) is designed as an integral box frame, and a support frame (25, 26) for the drive motors (23, 24) is secured to the vehicle structure (19) or integrated into the latter.

16. Fire-fighting vehicle according to one or more of claims 1 to 15, characterised in that the support frame (25, 26) is arranged in the region of underfloor boxes of the vehicle structure (19).

17. Fire-fighting vehicle according to one or more of claims 1 to 16, characterised in that the support frame (25, 26) for the drive motor (23, 24) is mounted in the vehicle structure (19) or on the main frame (2) so as to be adjustable vertically and/or laterally.

18. Fire-fighting vehicle according to one or more of claims 1 to 17, characterised in that an auxiliary frame (46) can be pivoted about a pivot axis (49) vertical to the loading surface (71) in a direction perpendicular to the longitudinal axis (17).

19. Fire-fighting vehicle according to one or more of claims 1 to 18, characterised in that a support frame (68) is designed as an integral motor nacelle (82) for the drive motor (23, 24).

20. Fire-fighting vehicle according to one or more of claims 1 to 19, characterised in that the support frame (68) or the motor nacelle (82) is coupled by rapid locking mechanisms to the vehicle structure (19) or the main frame (2).

21. Fire-fighting vehicle according to one or more of claims 1 to 20, characterised in that axle transmissions (35, 37) of the individual drive axles (6, 9, 10) of the axle assemblies (3, 4) are arranged laterally offset relative to the longitudinal axis (17) of the vehicle, and the distance between the input shaft of the axle transmissions (35, 37) and the longitudinal axis (17) of the vehicle corresponds roughly to half the distance between the longitudinal axis (17) of the vehicle and a middle axis of the drive motors (23, 24).

22. Fire-fighting vehicle according to one or more of claims 1 to 21, characterised in that a tank (38) for the operating material of the drive motors (23, 24) is arranged between the two drive motors (23, 24).

23. Fire-fighting vehicle according to one or more of claims 1 to 22, characterised in that the drive motors (23, 24) are connected to a central control device.

24. Fire-fighting vehicle according to one or more of claims 1 to 23, characterised in that the control device is connected with sensors for the speed of the individual wheels (7, 8, 11, 12).

25. Fire-fighting vehicle according to one or more of claims 1 to 24, characterised in that the drive power of the individual drive motors (23, 24) is controlled depending on the speeds of the individual wheels (7, 8, 11, 12) of the individual vehicle axles (6, 9, 10) detected by the sensors.

26. Fire-fighting vehicle according to one or more of claims 1 to 25, characterised in that between at least one of the drive motors (23, 24) and a vehicle axle (6, 9, 10) a power divider (32) is arranged which is connected by a secondary output (36) to the fire-extinguishing agent pump (39) and/or the generator.

27. Fire-fighting vehicle according to one or more of claims 1 to 26, characterised in that the drive motors (23, 24) have a different size or drive output.

## Revendications

1. Véhicule de lutte contre l'incendie, notamment pour aéroport, avec au moins deux moteurs d'entraînement disposés des deux côtés d'un axe longitudinal qui peuvent être accouplés respectivement par un engrenage avec au moins un essieu de roulement et/ou une prise de force secondaire, la prise de force secondaire (36) étant accouplée à une pompe de produit d'extinction (39) et/ou un générateur, caractérisé en ce qu'au moins une grande partie de la hauteur de construction (27) des moteurs d'entraînement (23, 24) se trouve en dessous d'un plan tangent le côté supérieur, orienté vers la carrosserie (19) du véhicule, des roues individuelles (7, 8, 11, 12) des essieux (6, 9, 10), où Les moteurs d'entraînement (23, 24) sont disposés dans le véhicule dans une position tournée de 100° et en ce qu'une face de chargement (71) au-dessus des moteurs d'entraînement (23, 24) s'étend transversalement à la direction longitudinale du véhicule juste dans la zone des parois latérales longitudinales (21, 22) du véhicule.

2. Véhicule de lutte contre l'incendie selon la revendication 1, caractérisé en ce que les deux moteurs d'entraînement (23, 24), par rapport à l'axe longitudinal (17), sont disposés à une certaine distance l'un à côté de l'autre.

3. Véhicule de lutte contre l'incendie selon la revendication 1 ou 2, caractérisé en ce que les deux moteurs d'entraînement (23, 24) sont décalés l'un relativement à l'autre dans la direction de l'axe longitudinal (17).

4. Véhicule de lutte contre l'incendie selon l'une ou plusieurs des revendications 1 à 3, caractérisé en ce que les deux moteurs d'entraînement (23, 24) sont orientés parallèlement l'un à l'autre.

5. Véhicule de lutte contre l'incendie selon l'une ou plusieurs des revendications 1 à 4, caractérisé en ce que les deux moteurs d'entraînement (23, 24) sont disposés entre deux ensembles à essieu (3, 4) l'un derrière l'autre dans la direction longitudinale du véhicule et à une certaine distance l'un de l'autre.

6. Véhicule de lutte contre l'incendie selon l'une ou plusieurs des revendications 1 à 5, caractérisé en ce que des parties des moteurs d'entraînement (23, 24) respectivement des accouplements (31) et/ou des engrenages intermédiaires (33) se chevauchent dans la direction de l'axe longitudinal (17) du véhicule.

7. Véhicule de lutte contre l'incendie selon l'une ou plusieurs des revendications 1 a 6, caractérisé en ce que les moteurs d'entraînement (23, 24) font saillie sur un plan venant en contact avec les faces, orientées vers l'axe longitudinal (17) du véhicule, des roues individuelles (7, 8, 11, 12) des essieux (9, 10), dans la direction des faces latérales extérieures des roues individuelles (7, 8, 11, 12) au moins en partie.

8. Véhicule de lutte contre l'incendie selon l'une ou plusieurs des revendications 1 a 7, caractérisé en ce qu'une face latérale des moteurs d'entraînement (23, 24) éloignée de l'axe longitudinal (17) du véhicule se situe à l'intérieur, ou bien est en affleurement avec une paroi latérale longitudinale (21, 22) de la carrosserie de véhicule (19).

9. Véhicule de lutte contre l'incendie selon l'une ou plusieurs des revendications 1 à 8, caractérisé en ce que les ensembles à essieu (3, 4) sont disposés sur un châssis principal continu (2) qui présente deux supports longitudinaux (14, 15) s'étendant dans la direction longitudinale du véhicule, espacés l'un de l'autre relativement à l'axe longitudinal (17), s'étendant parallèlement, et en ce que respectivement l'un des moteurs d'entraînement (23, 24) est disposé entre respectivement l'un des deux supports longitudinaux (14, 15) et une paroi latérale longitudinale (21, 22) du véhicule.

10. Véhicule de lutte contre l'incendie selon l'une ou plusieurs des revendications 1 à 9, caractérisé en ce que les moteurs d'entraînement (23, 24) sont disposés en dessous d'une arête supérieure des supports longitudinaux (14, 15) orientée vers une surface de chargement (71).

11. Véhicule de lutte contre l'incendie selon l'une ou plusieurs des revendications 1 a 10, caractérisé en ce que l'un des moteurs d'entraînement (23, 24) est disposé entre les ensembles à essieu (3, 4) et au moins un moteur d'entraînement additionnel (23, 24) à l'extérieur des essieux de roulement (6, 10) éloignés l'un de l'autre, espacés le plus l'un de l'autre des appareils de roulement.

12. Véhicule de lutte contre l'incendie selon l'une ou plusieurs des revendications 1 à 11, caractérisé en ce que la pompe de produit d'extinction (39) est disposée au-dessus d'au moins l'un des deux moteurs d'entraînement (23, 24).

13. Véhicule de lutte contre l'incendie selon l'une ou plusieurs des revendications 1 a 12, caractérisé en ce qu'un écart (18) transversalement a la direction longitudinale du véhicule entre les supporte longitudinaux (14, 15), au voisinage des deux moteurs d'entraînement (23, 24), est plus petit qu'au voisinage d'au moins un des ensembles à essieu (4).

14. Véhicule de lutte contre l'incendie selon l'une ou plusieurs des revendications 1 à 13, caractérisé en ce que les supports longitudinaux (14, 15) sont coudés au voisinage des moteurs d'entraînement (23, 24) dans la direction de la hauteur.

15. Véhicule de lutte contre l'incendie selon l'une ou plusieurs des revendications 1 à 14, caractérisé en ce que la carrosserie de véhicule (19) est réalisée comme support de caisse auto-porteur et qu'un châssis de support (25, 26) pour les moteurs d'entraînement (23, 24) est fixé à la carrosserie de véhicule (19) ou est intégré dans celle-ci.

16. Véhicule de lutte contre l'incendie selon l'une ou plusieurs des revendications 1 à 15, caractérise en ce que le châssis de support (25, 26) est disposé au voisinage de caissons couchés sous le châssis de la carrosserie de véhicule (19).

17. Véhicule de lutte contre l'incendie selon l'une ou plusieurs des revendications 1 à 16, caractérisé en ce que le châssis de support (25, 26) pour le moteur d'entraînement (23, 24) est logé d'une manière ajustable en hauteur et/ou vers le côté dans la carrosserie de véhicule (19) respectivement au châssis principal (2).

18. Véhicule de lutte contre l'incendie selon l'une ou plusieurs des revendications 1 à 17, caractérisé en ce qu'un châssis auxiliaire (46) peut être pivoté autour d'un axe de pivotement (49) vertical à la surface de chargement (71), dans la direction transversalement à l'axe longitudinal (17).

19. Véhicule de lutte contre l'incendie selon l'une ou plusieurs des revendications 1 à 18, caractérisé en ce qu'un châssis de support (68) est réalisé sous forme de nacelle auto-porteuse à moteur (82) pour le moteur d'entraînement (23, 24).

20. Véhicule de lutte contre l'incendie selon l'une ou plusieurs des revendications 1 à 19, caractérisé en ce que le châssis de support (68) respectivement la nacelle à moteur (82) est accouplée par des fermetures rapides à la carrosserie de véhicule (19) respectivement au châssis principal (2).

21. Véhicule de lutte contre l'incendie selon l'une ou plusieurs des revendications 1 à 20, caractérisé en ce que les mécanismes d'essieu (35, 37) des différents essieux (6, 9, 10) des ensembles a essieu (3, 4) sont disposés d'une manière décalée latéralement à l'axe longitudinal (17) du véhicule et en ce qu'une distance de l'arbre d'entrée du mécanisme d'essieu (35, 37) et l'axe longitudinal (17) du véhicule correspond à peu près à la moitié de la distance entre l'axe longitudinal (17) du véhicule et un axe médian des moteurs d'entraînement (23, 24).

22. Véhicule de lutte contre l'incendie selon l'une ou plusieurs des revendications 1 à 21, caractérisé en ce qu'un réservoir (38) pour le fluide d'actionnement des moteurs d'entraînement (23, 24) est disposé entre les deux moteurs d'entraînement (23, 24).

23. Véhicule de lutte contre l'incendie selon l'une ou plusieurs des revendications 1 à 22, caractérisé en ce que les moteurs d'entraînement (23, 24) sont reliés à un dispositif de commande central.

24. Véhicule de lutte contre l'incendie selon l'une ou plusieurs des revendications 1 à 23, caractérisé en ce que le dispositif de commande est commuté ensemble avec des capteurs pour la vitesse de rotation des roues individuelles (7, 8, 11, 12).

25. Véhicule de lutte contre l'incendie selon l'une Ou plusieurs des revendications 1 à 24, caractérisé en ce que la puissance d'entraînement des différents moteurs d'entraînement (23, 24) est réglée en fonction des vitesses de rotation, détectées par les capteurs, des roues individuelles (7, 8, 11, 12) des différents essieux (6, 9, 10).

26. Véhicule de lutte contre l'incendie selon l'une ou plusieurs des revendications 1 à 25, caractérisé en ce qu'il est disposé entre au moins l'un des moteurs d'entraînement (23, 24) et un essieu (6, 9, 10) un organe de division de puissance (32) qui est relié par une prise de force secondaire (36) à la pompe de produit d'extinction (39) et/ou au générateur.

27. Véhicule de lutte contre l'incendie selon l'une ou plusieurs des revendications 1 à 26, caractérisé en ce que les moteurs d'entraînement (23, 24) ont une grandeur respectivement puissance d'entraînement différente.
